# EUROPÄISCHE PATENTANMELDUNG

(11) **EP 3 088 151 A1**
(43) Veröffentlichungstag der Anmeldung: **02.11.2016**
(21) Anmeldenummer: 15165313.6
(22) Anmeldetag: 28.04.2015
(51) Int. Cl.: B28D 7/00

(54) **RÜCKFAHRMODUS FÜR KERNBOHRSYSTEME**

(71) Anmelder: HILTI Aktiengesellschaft, 9494 Schaan (LI)
(72) Erfinder: Drexl, Tobias, 86947 Weil (DE); Hartig, Andreas, 86161 Augsburg (DE); Schmalholz, Thomas, 87600 Kaufbeuren (DE); Link, Bernhard, 86986 Schwabbruck (DE); Golubovic, Goran, 86807 Buchloe (DE)
(74) Vertreter: Hilti Aktiengesellschaft Corporate Intellectual Property

(57) **Zusammenfassung**

Regelverfahren zur Verwendung eines Kernbohrsystems enthaltend eine Kernbohrmaschine und eine Vorschubeinrichtung zum Antreiben der Kernbohrmaschine entlang einer Maschinenhalteeinrichtung,
gekennzeichnet durch die folgenden Verfahrensschritte
- Bestimmen des Endes eines Kernbohrvorgangs anhand eines Erreichens eines vorbestimmten Schwellwerts für wenigstens einen entsprechenden vorbestimmten Bohrparameter; und
- Auswählen eines Rückfahrmodus zum Zurückfahren eines Bohrwerkzeugs aus einem Bohrloch mit einer Rückfahrdrehgeschwindigkeit, welche einem Vielfachen einer vorbestimmten Anbohrdrehgeschwindigkeit des Bohrwerkzeugs zu Beginn des Kernbohrvorgangs entspricht.

Sowie eine Vorschubeinrichtung zum Antreiben einer Kernbohrmaschine entlang einer Maschinenhalteeinrichtung zur Verwendung des Verfahrens, ein Kernbohrmaschine zur Verwendung des Verfahrens als auch ein Kernbohrsystem enthaltend eine Kernbohrmaschine und eine Vorschubeinrichtung zum Antreiben der Kernbohrmaschine entlang einer Maschinenhalteeinrichtung zur Verwendung des Verfahrens.

## Beschreibung

Die vorliegende Erfindung bezieht sich auf ein Regelverfahren zur Verwendung eines Kernbohrsystems enthaltend eine Kernbohrmaschine und eine Vorschubeinrichtung zum Antreiben der Kernbohrmaschine entlang einer Maschinenhalteeinrichtung.

Des Weiteren bezieht sich die Erfindung auf eine Vorschubeinrichtung zum Antreiben einer Kernbohrmaschine entlang einer Maschinenhalteeinrichtung zur Verwendung des erfindungsgemäßen Verfahrens.

Außerdem bezieht sich die Erfindung auf eine Kernbohrmaschine zur Verwendung des erfindungsgemäßen Verfahrens.

Darüber hinaus bezieht sich die Erfindung auf ein Kernbohrsystem enthaltend eine Kernbohrmaschine und eine Vorschubeinrichtung zum Antreiben der Kernbohrmaschine entlang einer Maschinenhalteeinrichtung zur Verwendung des erfindungsgemäßen Verfahrens.

Der eigentliche Kernbohrvorgang ist üblicherweise damit beendet, dass entweder ein sogenannter Durchbruch oder aber eine bestimmte Bohrlochtiefe in einem zu bearbeitenden Werkstoff erreicht ist. Bei dem zu bearbeitenden Werkstoff handelt es sich für gewöhnlich um ein mineralisches Material, wie z.B. Beton, Ziegelwerk oder ähnliche Materialien.

Bei einem Durchbruch handelt es sich, wenn der zu bearbeitende Werkstoff vollständig von dem als Bohrkrone ausgestalteten Bohrwerkzeug durchschnitten bzw. durchbohrt ist. Hierbei befindet sich das abgetrennte bzw. herausgeschnittene Material in Form eines sogenannten Bohrkerns im Inneren der Bohrkrone und kann zusammen mit der Bohrkrone aus dem Bohrloch entnommen werden. Bei dem bloßen Erreichen einer bestimmten Bohrlochtiefe wird lediglich ein zylindrischer Ring in den zu bearbeitenden Werkstoff geschnitten. Es wird hierbei kein aus dem Werkstoff losgelöster Bohrkern erzeugt, der zusammen mit der Bohrkrone aus dem Bohrloch entnommen werden kann. Der Bohrkern bleibt nach dem Bohrvorgang als Säule in dem Bohrloch bestehen und muss in einem separaten Arbeitsgang nach Entnahme der Bohrkrone von dem restlichen Werkstoff abgetrennt sowie aus dem Bohrloch entnommen werden.

Nachdem der Kernbohrvorgang zum Erzeugen eines zylindrischen Bohrlochs abgeschlossen ist, wird üblicherweise die zum Kühlen und Spülen notwendige Wasserversorgung des Kernbohrsystems abgeschaltet, der Antrieb des Kernbohrmaschine gestoppt und die Bohrkrone aus dem erzeugten Bohrloch gezogen.

Aufgrund der Tatsache, dass durch Kernbohrsysteme gebohrte Bohrlöcher nicht absolut gerade verlaufen, Bohrkronen schon zu Beginn des Kernbohrvorgangs auf der Oberfläche des zu bearbeitenden Werkstoffs verlaufen, d.h. nicht korrekt zum späteren Bohrloch zentriert sind oder während des Kernbohrvorgangs verbiegen können und sich einzelne Gesteinsbrocken oder Teile von Armierungseisen in dem Bohrloch befinden können, kann die Entnahme der Bohrkrone nach Beendigung des Bohrvorgangs erheblich erschwert werden. Es ist sogar möglich, dass aufgrund der vorstehend genannten Gegebenheiten, die Bohrkrone und/oder die Kernbohrmaschine bei dem Versuch die Bohrkrone aus dem Bohrloch zu entnehmen beschädigt werden.

Es ist daher **Aufgabe** der der vorliegenden Erfindung die vorstehend beschriebenen Probleme zu lösen und insbesondere ein Regelverfahrens zur Verwendung eines Kernbohrsystems enthaltend eine Kernbohrmaschine und eine Vorschubeinrichtung zum Antreiben der Kernbohrmaschine entlang einer Maschinenhalteeinrichtung zur Verfügung zu stellen, mit dem die Entnahme der Bohrkrone nach Beendigung des Bohrvorgangs verbessert wird. Darüber hinaus besteht die Aufgabe der vorliegenden Erfindung im Bereitstellen einer Vorschubeinrichtung zum Antreiben einer Kernbohrmaschine entlang einer Maschinenhalteeinrichtung, einer Kernbohrmaschine sowie eines Kernbohrsystems enthaltend eine Kernbohrmaschine und eine Vorschubeinrichtung zum Antreiben der Kernbohrmaschine entlang einer Maschinenhalteeinrichtung zur Verwendung des Verfahrens.

Die Aufgabe wird im Wesentlichen durch die Merkmale der unabhängigen Ansprüche 1, 6, 7 und 8 gelöst. Vorteilhafte Weiterentwicklungen ergeben sich aus den entsprechenden Unteransprüchen.

Demnach wird ein Regelverfahren bereitgestellt zur Verwendung eines Kernbohrsystems umfassend eine Kernbohrmaschine und eine Vorschubeinrichtung zum Antreiben der Kernbohrmaschine entlang einer Maschinenhalteeinrichtung.

Erfindungsgemäss enthält das Verfahren die Schritte
- Bestimmen des Endes eines Kernbohrvorgangs anhand eines Erreichens eines vorbestimmten Schwellwerts für wenigstens einen entsprechenden vorbestimmten Bohrparameter; und
- Auswählen eines Rückfahrmodus zum Zurückfahren eines Bohrwerkzeugs aus einem Bohrloch mit einer Rückfahrdrehgeschwindigkeit, welche einem Vielfachen einer vorbestimmten Anbohrdrehgeschwindigkeit des Bohrwerkzeugs zu Beginn des Kernbohrvorgangs entspricht.

Durch das Betreiben des Bohrwerkzeugs in dem Rückfahrmodus mit der entsprechenden Rückfahrdrehgeschwindigkeit ist das Bohrwerkzeug und auch die Kernbohrmaschine robuster und damit weniger anfällig für Beschädigungen durch Unebenheiten bzw. Unregelmäßigkeiten, ein verformtes Bohrwerkzeug sowie Gesteinsbrocken oder Teile von Armierungseisen in dem gebohrten Bohrloch.

Um eine optimale Drehgeschwindigkeit für das Bohrwerkzeug zu erreichen, kann gemäß einer vorteilhaften Ausführungsform der vorliegenden Erfindung vorgesehen sein, dass die Rückfahrdrehgeschwindigkeit einem Vielfachen der Anbohrdrehgeschwindigkeit entspricht. Alternativ dazu kann gemäß einer weiteren vorteilhaften Ausführungsform die Rückfahrdrehgeschwindigkeit einem 3- bis 4-fachen der Anbohrdrehgeschwindigkeit entsprechen oder dem halben Wert einer Leerlaufdrehgeschwindigkeit entsprechen.

Entsprechend einer weiteren Ausführungsform der vorliegenden Erfindung kann es vorteilhaft sein, dass die Anbohrdrehgeschwindigkeit von dem Durchmesser des verwendeten Bohrwerkzeugs abhängig ist.

Gemäß einer vorteilhaften Ausführungsform der vorliegenden Erfindung kann es dienlich sein, dass der Bohrparameter einem Drehzahlwert eines Antriebs der Kernbohrmaschine, einem von dem Antrieb erzeugten und auf das Bohrwerkzeug übertragenen Drehmomentwert oder einem Stromstärkenwert des Antriebs entspricht.

Entsprechend einer weiteren Ausführungsform der vorliegenden Erfindung kann es vorteilhaft sein, dass der vorbestimmte Schwellwert einem vorbestimmten prozentualen Anteil an dem entsprechenden Bohrparameter entspricht.

Die Erfindung wird bezüglich vorteilhafter Ausführungsbeispiele näher erläutert, hierbei zeigt
- Fig. 1: ein erfindungsgemässes Kernbohrsystem mit einer Kernbohrmaschine, einer Vorschubeinrichtung und einer Maschinenhalteeinrichtung in einer Ausgangsposition;
- Fig. 2: das erfindungsgemässe Kernbohrsystem mit der Kernbohrmaschine, der Vorschubeinrichtung und der Maschinenhalteeinrichtung zu Beginn eines Kernbohrvorgangs in einen mineralischen Werkstoff;
- Fig. 3: das erfindungsgemässe Kernbohrsystem mit der Kernbohrmaschine, der Vorschubeinrichtung und der Maschinenhalteeinrichtung mit einer Bohrkrone in dem mineralischen Werkstoff;
- Fig. 4: das erfindungsgemässe Kernbohrsystem mit der Kernbohrmaschine, der Vorschubeinrichtung und der Maschinenhalteeinrichtung mit der Bohrkrone beim einem Auftreffen auf ein Armierungseisen in dem mineralischen Werkstoff; und
- Fig. 5: das erfindungsgemässe Kernbohrsystem mit der Kernbohrmaschine, der Vorschubeinrichtung und der Maschinenhalteeinrichtung mit der Bohrkrone nach einem Zerschneiden eines Armierungseisens in dem mineralischen Werkstoff.

### AUSFÜHRUNGSBEISPIEL:

### VORRICHTUNG:

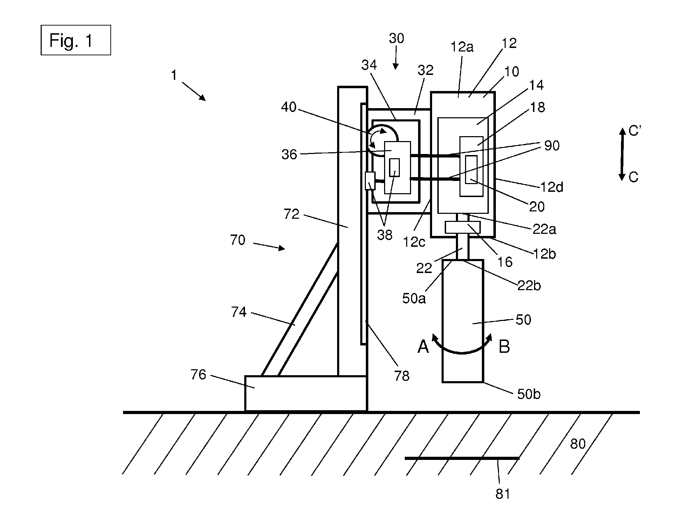

Fig. 1 zeigt ein Kernbohrsystem 1 als einen Zusammenschluss aus einer Werkzeugmaschine 10, einer Vorschubeinrichtung 30, einem Bohrwerkzeug 50 in Form eine Bohrkrone und eine Maschinenhalteeinrichtung in Form eines Maschinenständers 70.

Die Werkzeugmaschine 10 ist in Form einer Kernbohrmaschine ausgestaltet und enthält ein Gehäuse 12, einen Antrieb 14, ein Getriebe 16, eine erste Steuerungseinheit 18, Sensoren 20 und eine Antriebswelle 22. Der Antrieb 14 ist in Form eines Elektromotors gestaltet. Alternativ kann auch jede andere geeignete Antriebsart gewählt werden.

Gemäss einer speziellen Ausgestaltungsform der vorliegenden Erfindung kann der Antrieb 14 durch einen Hochfrequenzmotor gebildet sein.

Die erste Steuerungseinheit 18 ist so ausgestaltet, dass diese sämtliche Parameter der Werkzeugmaschine 10 und insbesondere sämtliche Parameter des Antriebs 14, welche von den Sensoren 20 der Werkzeugmaschine 10 gemessen werden, erfasst. Zu diesen Parametern zählt beispielsweise der eingelegte Gang des Getriebes 16, die Drehzahl des Elektromotors 14, das von dem Elektromotor 14 erzeugte Drehmoment, die Drehzahl des Bohrwerkzeugs 50, die anliegende und/oder abgegebene Leistung des Elektromotors 14, die anliegende Stromstärke des Elektromotors 14, etc.

Das Gehäuse 12 weist eine obere Seite 12a, eine untere Seite 12b, eine linke Seite 12c und eine rechte Seite 12d auf. Der Antrieb 14 befindet sich im Inneren des Gehäuses 12.

Die Antriebswelle 22 weist ein erstes Ende 22a und ein zweites Ende 22b auf. Das erste Ende 22a der Antriebswelle 22 ist so mit dem Antrieb 14 verbunden, dass der als Elektromotor ausgestaltete Antrieb 14 die Antriebswelle 22 in eine erste Drehbewegung A oder zweite Drehbewegung B versetzen kann. Das zweite Ende 22b der Antriebswelle 22 ragt an der unteren Seite 12b des Gehäuses 12 aus der Kernbohrmaschine 10 heraus. Des Weiteren weist das Bohrwerkzeug 50 in Gestalt einer zylindrischen Bohrkrone ein erstes Ende 50a und ein zweites Ende 50b auf. Das erste Ende 50a des Bohrwerkzeugs 50 ist drehfest mit dem zweiten Ende 22b der Antriebswelle 22 verbunden. Über die Antriebswelle 22 kann die Werkzeugmaschine 10 das Bohrwerkzeug 50 in die erste Drehbewegung A oder in die zweite Drehbewegung B versetzten.

Die Vorschubeinrichtung 30 enthält ein Gehäuse 32, in dem ein Vorschubantrieb 34, eine zweite Steuerungseinheit 36, Sensoren 38 sowie ein Antriebsritzel 40 positioniert sind. Die zweite Steuerungseinheit 36 ist so ausgestaltet, dass diese sämtliche Parameter der Vorschubeinrichtung 30 und insbesondere die Parameter des Vorschubantriebs 34, welche von den Sensoren 38 der Vorschubeinrichtung 30 gemessen werden, erfasst. Zu diesen gemessenen Parametern zählt beispielsweise die Vorschubgeschwindigkeit der Vorschubeinrichtung 30 zum Maschinenständer 70 bzw. Werkstück 80, die bereits zurückgelegte Wegstrecke der Vorschubeinrichtung 30 seit Beginn des Bohrvorgangs gemessen von einem zu definierenden Startpunkt (auch Nullpunkt genannt), die Position der Vorschubeinrichtung 30 entlang des Maschinenständers 70, der Drehwinkel des Vorschubantriebs 34, etc.

Darüber hinaus kann eine Vielzahl an Parametern von der Steuerungseinheit 36 der Vorschubeinrichtung 30 berechnet werden. Die Parameterberechnung erfolgt dabei anhand eines Vergleichs zwischen den von den Sensoren 38 erfassten Parameter, wie z.B. dem Drehwinkel des Antriebsritzels 40, und den vorgegebenen (d.h. voreingestellten) Parametern. Aus der Parameterberechnung kann unter anderem die Vorschubgeschwindigkeit der Vorschubeinrichtung 30 zum Maschinenständer 70, die relative und/oder absolute Position der Vorschubeinrichtung 30, die bereits zurückgelegte Wegstrecke der Vorschubeinrichtung 30 seit Beginn des Bohrvorgangs sowie der Zeitpunkt und/oder die Wegstrecke bis zum Erreichen des Anschlags des Bohrwerkzeugs 50 ermittelt werden.

Der Vorschubantrieb 34 ist dabei, wie in Fig. 1 gezeigt, gemäss einer ersten Ausgestaltung in Form eines Elektromotors ausgestaltet.

Der Vorschubantrieb 34 treibt unter Kontrolle der Steuerungseinheit 36 das Antriebsritzel 40 und damit die Vorschubeinrichtung 30 relativ zum Maschinenständer 70 an.

Die Vorschubeinrichtung 30 ist derartig ausgestaltet, dass diese an den Maschinenständer 70 montiert werden kann (wie nachfolgend beschrieben) und mit Hilfe des Antriebsritzels 40 entlang des Maschinenständers 70 in Pfeilrichtung C bewegt werden kann. Die Sensoren 38 sind in Gestalt von Winkel-, Drehwinkel-, Beschleunigungs-, Geschwindigkeits- bzw. Positionssensoren, und dabei so ausgestaltet, dass diese entweder inkrementell direkt am Vorschubantrieb 34 oder absolut entlang des Maschinenständers 70 die Beschleunigung, die Vorschubgeschwindigkeit, den Winkel, den Drehwinkel sowie die Position der Vorschubeinrichtung 30 erfassen.

Der Maschinenständer 70 enthält eine Führungsschiene 72, ein Verstrebungselement 74 sowie eine Grundplatte 76. Die Führungsschiene 72 ist so auf der Grundplatte 76 positioniert und von dem Verstrebungselement 74 gestützt, dass die Führungsschiene 72 vertikal oder im vorgegebenen Winkel ausgerichtet ist. Des Weiteren weist die Führungsschiene 72 an einer Seite eine Zahnstange 78 auf. Das Verstrebungselement 74 ist dabei optional und kann gemäss einer alternativen Ausgestaltungsform des Maschinenständers auch weggelassen sein.

Wie ebenfalls in Fig. 1 dargestellt, ist das Gehäuse 12 der Werkzeugmaschine 10 an dem Gehäuse 32 der Vorschubeinrichtung 30 befestigt.

Die Vorschubeinrichtung 30 ist so an dem Maschinenständer 70 montiert, dass das Antriebsritzel 40 der Vorschubeinrichtung 30 in die Zahnstange 78 des Maschinenständers 70 eingreift. Wenn unter Kontrolle der Steuerungseinheit 36 der Vorschubantrieb 34 das Antriebsritzel 40 in eine Drehbewegung versetzt, wird die Vorschubeinrichtung 30 reversibel entlang des Maschinenständers 70 in Pfeilrichtung C bzw. C' bewegt. Dadurch, dass die Werkzeugmaschine 10 an der Vorschubeinrichtung 30 befestigt ist, wird durch das Bewegen der Vorschubeinrichtung 30 entlang des Maschinenständers 70 in Pfeilrichtung C auch die Werkzeugmaschine 10 entlang des Maschinenständers 70 in Pfeilrichtung C bewegt. Durch dieses vertikale Bewegen der Werkzeugmaschine 10 wird das an der Werkzeugmaschine 10 befestigte Bohrwerkzeug 50 in Gestalt der zylindrischen Bohrkrone vertikal in das zu bearbeitenden Werkstück 80, d.h. in den Untergrund, befördert, wodurch ein Loch in das Werkstück 80 gebohrt wird. Der Werkstoff 80 ist dabei als mineralischer Werkstoff, insbesondere als Beton mit Armierungseisen 81 ausgestaltet.

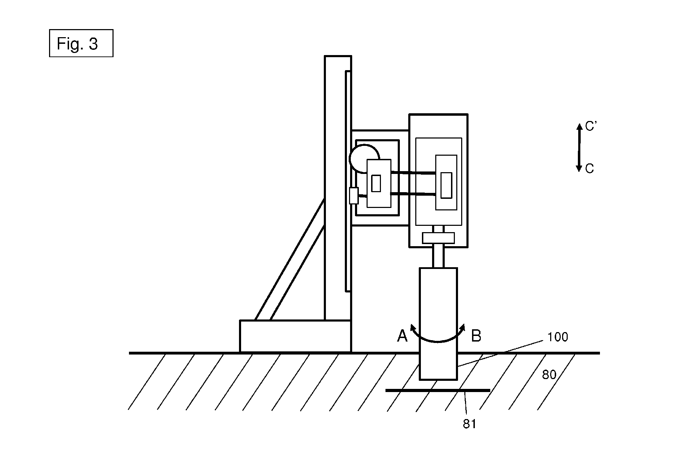

Wie bereits vorstehend beschrieben, messen die jeweiligen Sensoren 38 der Vorschubeinrichtung 30 die Parameter der Vorschubeinrichtung 30. Darüber hinaus messen die jeweiligen Sensoren 38 der Werkzeugmaschine 10 die Parameter der Werkzeugmaschine 10. Wie in Fig. 3 dargestellt, sind die Vorschubeinrichtung 30 sowie die Werkzeugmaschine 10 durch Verbindungselemente 90 derartig miteinander verbunden, dass sämtliche erfassbare Parameter der Vorschubeinrichtung 30 zu der Werkzeugmaschine 10 gesendet werden können und sämtliche erfassbare Parameter der Werkzeugmaschine 10 zu der Vorschubeinrichtung 30 gesendet werden können. Es liegt somit eine bidirektionale Kommunikation zwischen Vorschubeinrichtung 30 und der Werkzeugmaschine 10 vor. Aufgrund dieser bidirektionalen Kommunikation ist es unter anderem möglich, dass beispielsweise über einen nicht gezeigten Startschalter an der Werkzeugmaschine 10 die Vorschubeinrichtung 30 gestartet und in Betrieb genommen wird.

Darüber hinaus ist es insbesondere möglich, dass der Informationsfluss, d.h. die bidirektionale Übertragung der Parameter, zwischen der Vorschubeinrichtung 30 und der Werkzeugmaschine 10 mit Hilfe eines nicht gezeigten Stromkabels erfolgt. Gemäss einer vorteilhaften Ausgestaltungsform kann dabei die bidirektionale Übertragung der Parameter von dem Stromkabel 100 über die Werkzeugmaschine 10 zu der Vorschubeinrichtung 30 erfolgen.

### BOHRVORGANG:

Wie bereits vorstehend beschrieben, ist in den Fig. 1 bis 5 ein Kernbohrsystem 1 schematisch dargestellt und ein Kernbohrvorgang zum Erzeugen eines Bohrlochs 100 in einen mineralischen Werkstoff 80 mit einzelnen Verfahrensschritten illustriert.

In Fig. 1 ist das Kernbohrsystem 1 zu Beginn eines Kernbohrvorgangs dargestellt. Die Bohrkrone 50 befindet sich hierzu oberhalb in Richtung C' über dem Werkstoff 80. Hierbei wird das Kernbohrsystem 1 mit einem Anbohrmodus betrieben. In dem Anbohrmodus betreibt der Antrieb 14 die Bohrkrone 50 in einer vorbestimmten Anbohrdrehgeschwindigkeit zum Drehen in die Drehrichtung A oder B. Die Anbohrdrehgeschwindigkeit ist abhängig von dem Durchmesser der für den jeweiligen Bohrvorgang verwendeten Bohrkrone 50.

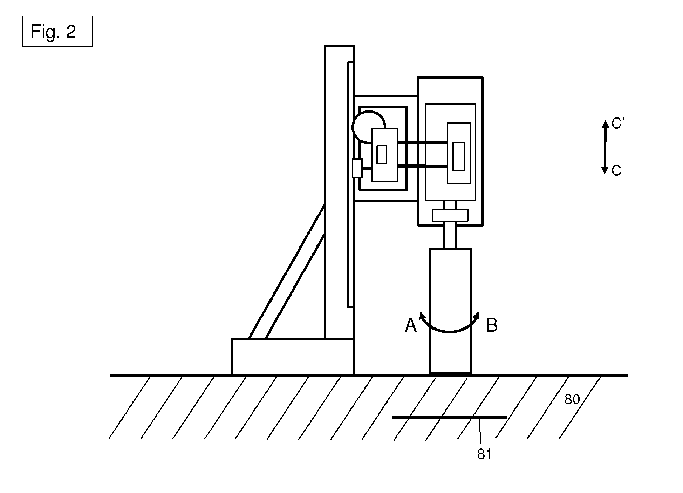

Wie in Fig. 2 gezeigt, wird anschließend die Bohrkrone 50, die sich in dem Anbohrmodus mit der Anbohrdrehgeschwindigkeit dreht, durch die Vorschubeinrichtung 30 in Richtung C auf den Werkstoff 80 zubewegt. Wenn das zweite Ende 50b der Bohrkrone 50 mit dem Werkstoff 80 in Kontakt tritt, beginnt die Bohrkrone 50, insbesondere die nicht dargestellten Schneidesegmente der Bohrkrone 50, den Werkstoff 80 zu verschneiden und ein Bohrloch 100 zu erzeugen.

Nachdem ein Anbohren des Werkstoffs 80 abgeschlossen ist, d.h. mit der Bohrkrone 50 in Richtung C eine Tiefe von ungefähr 20 mm in den Werkstoff 80 geschnitten wurde, beginnt der restliche Bohrvorgang zur Fertigstellung des Bohrlochs 100. Hierzu wird das Kernbohrsystem 1 von dem Anbohrmodus in einen Bohrmodus umgestellt. Hierzu wird die Drehgeschwindigkeit der Bohrkrone 50 von der relativ niedrigen Anbohrdrehgeschwindigkeit des Anbohrmodus zu der Bohrgeschwindigkeit des Bohrmodus erhöht. Mit dieser Bohrgeschwindigkeit des Bohrmodus wird die Bohrkrone 50 bis zur Fertigstellung des Bohrlochs 100 gedreht und von der Vorschubeinrichtung 30 in Richtung C vorangetrieben.

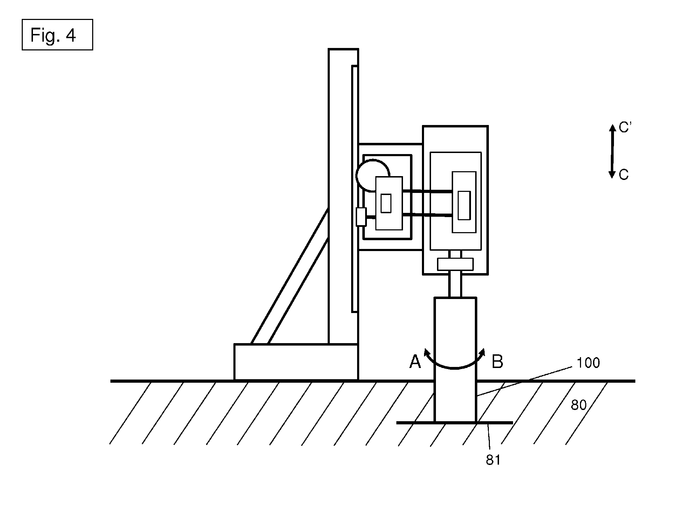

Wenn, wie in Fig. 4 dargestellt, die Bohrkrone 50 auf ein im mineralischen Werkstoff 80 vorkommendes Armierungseisen 81 trifft, wird dies aufgrund von sich verändernden Bohrparametern durch das Kernbohrsystem 1 detektiert. Als Folge daraus wird das Kernbohrsystem 1 von dem Bohrmodus in einen Armierungseisenmodus (sog. Iron Boost) umgestellt. In dem Armierungseisenmodus werden vorbestimmte Bohrparameter des Kernbohrsystems 1 auf die geänderten Bedingungen bei dem Zerschneiden eines Armierungseisens verändert bzw. angepasst. So wird beispielsweise die Bohrdrehgeschwindigkeit auf eine Armierungseisendrehgeschwindigkeit reduziert sowie das von dem Antrieb 14 erzeugte und auf die Bohrkrone 50 übertragende Drehmoment erhöht. Durch die für den Armierungseisenmodus angepassten Bohrparameter auf vorbestimmte Werte kann ein Armierungseisen schneller und effizienter zerschnitten werden. Insgesamt wird mit Hilfe des Armierungseisenmodus der gesamte Kernbohrvorgang ebenfalls schneller und effizienter.

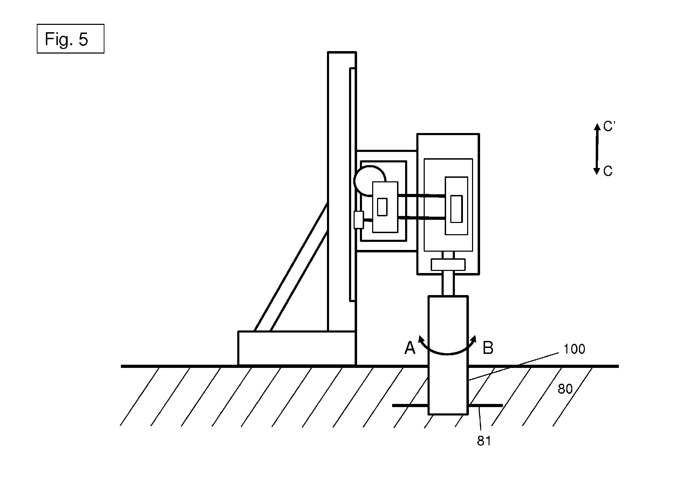

Wenn anhand von sich entsprechend verändernden Bohrparametern durch das Kernbohrsystem 1 detektiert wird, dass das Armierungseisen 81 durch die Bohrkrone 50 durchschnitten wurde und im Anschluss daran wieder lediglich der mineralische Werkstoff 80 durch die Bohrkrone 50 zerschnitten wird (vgl. Fig. 5), wird das Kernbohrsystem 1 von dem Armierungseisenmodus wieder in den Bohrmodus umgestellt. Hierzu wird beispielsweise die Bohrdrehgeschwindigkeit auf Bohrgeschwindigkeit erhöht sowie das von dem Antrieb 14 erzeugte und auf die Bohrkrone 50 übertragende Drehmoment reduziert.

Nachdem die Bohrkrone 50 entweder die gewünschte Bohrtiefe in Richtung C in den mineralischen Werkstoff 80 geschnitten hat oder ein Durchbruch durch den mineralischen Werkstoff 80 erreicht wurde, wird das Kernbohrsystem von dem Bohrmodus in einen Rückfahrmodus umgestellt.

Das Erreichen der gewünschten Bohrlochtiefe kann anhand eines Erreichens eines vorbestimmten Schwellwerts für wenigstens einen entsprechenden vorbestimmten Bohrparameter bestimmt werden. Bei den Bohrparametern kann es sich z.B. um die Vorschubgeschwindigkeit der Vorschubeinrichtung 30, die Drehzahl der Antriebs 14, die Drehzahl der Bohrkrone 50, die Motorstromstärke des Antriebs 14, das von dem Antrieb 14 erzeugte und auf die Bohrkrone 50 übertragende Drehmoment oder dergleichen handeln. So wird beispielsweise von dem Kernbohrsystem 1 anhand einer abnehmenden Vorschubgeschwindigkeit der Vorschubeinrichtung 30, eines reduzierten Drehmoments des Antriebs 14 und einer erhöhten Drehzahl des Antriebs 14 sowie der Bohrkrone 50 das Erreichen einer vorbestimmten Bohrtiefe oder ein Durchbruch ermittelt.

Mit Hilfe des Rückfahrmodus kann die Möglichkeit die Bohrkrone und/oder die Kernbohrmaschine bei der Entnahme der Bohrkrone aus dem Bohrloch 100 zu beschädigen reduziert werden.

Hierzu wird für die Einstellung des Kernbohrsystems in den Rückfahrmodus die Drehzahl der Bohrkrone 50 auf eine Rückfahrdrehgeschwindigkeit eingestellt und die Bohrkrone 50 von der Vorschubeinrichtung 30 in Richtung C' aus dem Bohrloch 100 gezogen. Die Rückfahrdrehgeschwindigkeit entspricht dabei einem Vielfachen der Anbohrdrehgeschwindigkeit der Bohrkrone zu Beginn des Kernbohrvorgangs. Wie bereits vorstehend beschrieben handelt es sich bei der Anbohrdrehgeschwindigkeit um die Drehgeschwindigkeit, die von dem Kernbohrsystem 1 für die Bohrkrone 50 bei dem ersten Kontakt mit dem mineralischen Werkstoff 80 und bis zum Erreichen einer Bohrtiefe von ungefähr 20 mm festgelegt wird. Als besonders vorteilhaft hat sich dabei ein Wert für die Rückfahrdrehgeschwindigkeit herausgestellt, der einem 3- bis 4-fachen der Anbohrdrehgeschwindigkeit der Bohrkrone bei Beginn des Bohrvorgangs entspricht. Alternativ kann die Rückfahrdrehgeschwindigkeit auch dem halben Wert der Leerlaufdrehgeschwindigkeit entsprechen.

## Patentansprüche

1. Regelverfahren zur Verwendung eines Kernbohrsystems (1) enthaltend eine Kernbohrmaschine (10) und eine Vorschubeinrichtung (30) zum Antreiben der Kernbohrmaschine (10) entlang einer Maschinenhalteeinrichtung (70),
**gekennzeichnet durch** die folgenden Verfahrensschritte
- Bestimmen des Endes eines Kernbohrvorgangs anhand eines Erreichens eines vorbestimmten Schwellwerts für wenigstens einen entsprechenden vorbestimmten Bohrparameter; und
- Auswählen eines Rückfahrmodus zum Zurückfahren eines Bohrwerkzeugs (50) aus einem Bohrloch (100) mit einer Rückfahrdrehgeschwindigkeit, welche einem Vielfachen einer vorbestimmten Anbohrdrehgeschwindigkeit des Bohrwerkzeugs (50) zu Beginn des Kernbohrvorgangs entspricht.

2. Verfahren nach Anspruch 1,
wobei die Rückfahrdrehgeschwindigkeit einem Vielfachen der Anbohrdrehgeschwindigkeit entspricht.

3. Verfahren nach Anspruch 1,
wobei die Rückfahrdrehgeschwindigkeit einem 3- bis 4-fachen der Anbohrdrehgeschwindigkeit entspricht.

4. Verfahren nach Anspruch 1,
wobei die Rückfahrdrehgeschwindigkeit dem halben Wert der Leerlaufdrehgeschwindigkeit entspricht.

5. Verfahren nach wenigstens einem der Ansprüche 1 bis 4,
wobei die Anbohrdrehgeschwindigkeit von dem Durchmesser des verwendeten Bohrwerkzeugs (50) abhängig ist.

6. Verfahren nach wenigstens einem der Ansprüche 1 bis 5,
wobei der Bohrparameter einem Drehzahlwert eines Antriebs (14) der Kernbohrmaschine (10), einem von dem Antrieb (14) erzeugten und auf das Bohrwerkzeug (50) übertragenen Drehmomentwert oder einem Stromstärkenwert des Antriebs (14) entspricht.

7. Verfahren nach wenigstens einem der Ansprüche 1 bis 6,
wobei der vorbestimmte Schwellwert einem vorbestimmten prozentualen Anteil an dem entsprechenden Bohrparameter entspricht.

8. Vorschubeinrichtung zum Antreiben einer Kernbohrmaschine (10) entlang einer Maschinenhalteeinrichtung (70) zur Verwendung des Verfahrens nach wenigstens einem der Ansprüche 1 bis 7.

9. Kernbohrmaschine zur Verwendung des Verfahrens nach wenigstens einem der Ansprüche 1 bis 7.

10. Kernbohrsystem (1) enthaltend eine Kernbohrmaschine (10) und eine Vorschubeinrichtung (30) zum Antreiben der Kernbohrmaschine (10) entlang einer Maschinenhalteeinrichtung (70) zur Verwendung des Verfahrens nach wenigstens einem der Ansprüche 1 bis 7.
